# EUROPEAN PATENT SPECIFICATION

(11) **EP 3 974 997 B1**
(45) Date of publication and mention of the grant of the patent: **22.01.2025**
(21) Application number: 21198546.0
(22) Date of filing: 23.09.2021
(51) Int. Cl.: G06F 13/38

(54) **A METHOD OF SIGNAL CONVERSION, A DEVICE, AN ELECTRONIC DEVICE AND A STORAGE MEDIUM**
VERFAHREN ZUR SIGNALUMWANDLUNG, VORRICHTUNG, ELEKTRONISCHE VORRICHTUNG UND SPEICHERMEDIUM
PROCÉDÉ DE CONVERSION DE SIGNAL, DISPOSITIF, DISPOSITIF ÉLECTRONIQUE ET SUPPORT DE STOCKAGE

(30) Priority: 23.09.2020 CN 202011009621
(43) Date of publication of application: 30.03.2022
(73) Proprietor: Autoflight (Kunshan) Co., Ltd., Kunshan City, Jiangsu Province (CN)
(72) Inventor: ZHANG, Hao, Shenzhen, 518054 (CN); QIU, Mingzhi, Shenzhen, 518054 (CN)
(74) Representative: MERH-IP Matias Erny Reichl Hoffmann Patentanwälte PartG mbB

(56) References cited:
- CN-A- 106 980 584
- US-A1- 2011 137 510
- US-A1- 2020 092 128
- WEI-CHIH HSU ET AL: "Design and Implementation of CAN-USB Converter Based on ARM7 Serial Protocol API", COMPUTER, CONSUMER AND CONTROL (IS3C), 2012 INTERNATIONAL SYMPOSIUM ON, IEEE, 4 June 2012 (2012-06-04), pages 333 - 336, XP032454152, ISBN: 978-1-4673-0767-3, DOI: 10.1109/IS3C.2012.91
- JUNHAO NIU: "Design of USB-CAN Controller Based on PIC18F4580", PROCEDIA ENGINEERING, vol. 29, 1 January 2012 (2012-01-01), Elsevier, pages 329 - 333, XP028457162, ISSN: 1877-7058, [retrieved on 20120215], DOI: 10.1016/J.PROENG.2011.12.717

## Description

### Field of the application

The application relates to the technical field of CANbus, in particular to CAN signal receiving, transmitting and conversion in CANbus industrial site, specifically to a CANbus signal conversion method, a device, an electronic device and a storage medium.

### Background of the application

Nowadays, there are more and more electric control systems in the equipment. Taking the automobile as an example, various sensors in the vehicle are all over the electronic fuel injection device, ABS device, airbag device, electric doors and windows, etc. to monitor the vehicle status information in real time and send this information to the corresponding control unit. CANbus bus network is used for the transmission of various types of sensor data on the vehicle. CN 106 980 584 A relates to a USB to CAN bus micro integrated converter.

In view of much wider application of CANbus nowadays, it is necessary to connect the CAN signal to the computer display, and use the standard CAN box during the period in many debugging scenarios, that is, acquire the CAN bus signal and forward it to the PC device. The existing CAN boxes are generally large in volume and high in price. When in use, it is necessary to install corresponding drivers to signal transmission.

### Summary of the application

The embodiment of the application provides a method of signal conversion, an electronic device and a storage medium, which can realize fast transmission during signal transmission.

In particular, it is provided a method of signal conversion having the features defined in claim 1.

Further, it is provided an electronic device having the features defined in claim 2.

Further, it is provided a computer-readable storage medium having the features defined in claim 3.

The embodiment of the application provides a method of signal conversion, an electronic device and a storage medium, which, by receiving the data of USB protocol type or the data of UAVCAN protocol type transmitted by the first device; converts the data of USB protocol type into the data of UAVCAN protocol type; alternatively, converts the data of UAVCAN protocol type into the data of USB protocol type; transmits the data of UAVCAN protocol type or the data of USB protocol type to the second device. The signal conversion method of the application can realize fast transmission during signal transmission.

It should be understood that the content described in this part is not intended to identify key or important features of the embodiment of the application, nor is it used to limit the scope of the application. Other features of the application will be easily understood through the following specifications.

### Brief description of the drawings

The attached drawings are provided for a better understanding of the solution and do not constitute a limitation of the application, of which:
Fig. 1 is the first flow diagram of a method of signal conversion provided by the embodiments of the application;
Fig. 2A is the second flow diagram of a method of signal conversion provided by the embodiments of the application;
Fig. 2B is the hardware scheme block diagram of a method of signal conversion provided by the embodiments of the application;
Fig. 2C is the software scheme block diagram of a method of signal conversion provided by the embodiments of the application;
Fig. 3 is the third flow diagram of a method of signal conversion provided by the embodiments of the application;
Fig. 4 is the structural diagram of a signal conversion device provided by the embodiments of the application;
Fig. 5 is the block diagram of an electronic device for implementing a method of signal conversion according to the embodiments of the application.

### Description of the preferred embodiments

In order to make clearer the purpose, technical solution and advantages of the embodiments of the application, the technical solution in the embodiments of the application will be clearly and completely described below in combination with the drawings in the embodiments of the application.

### Embodiment 1

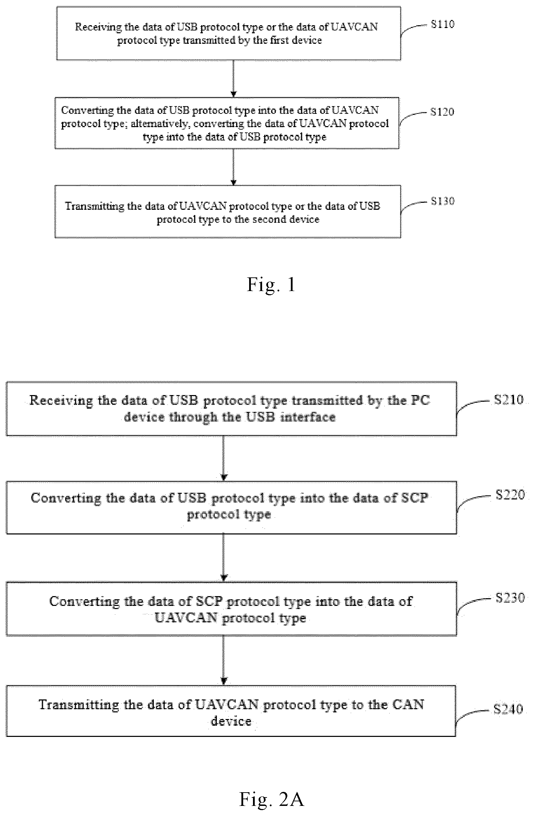

Fig. 1 is the first flow diagram of a method of signal conversion provided by the embodiment of the application. The embodiment can be applied to the transmission, reception and conversion of CAN signals in CANbus industrial site. A method of signal conversion provided by the embodiment can be executed by the signal conversion device provided by the embodiment of the application, which can be implemented by software and/or hardware and integrated in the electronic device executing the method.

Referring to Fig. 1, the method of the embodiment includes but is not limited to the following steps:
S110 for receiving the data of USB protocol type or the data of UAVCAN protocol type transmitted by the first device.

In the specific embodiment of the application, USB (Universal Serial Bus) is an external bus standard, which is used to regulate the connection and communication between the computer and external devices. USB interface is a common PC interface connecting computer system and equipment to be tested. UAVCAN, as a lightweight protocol, aims to provide a highly reliable communication method for NC electronic applications through CAN bus, such as aerospace, automobile and other electronic applications. Among them, CAN (Controller Area Network) is a bidirectional serial multi node digital communication system applied in the debugging scenario of industrial site. It is an open, digital underlying control network for multi-point communication. CAN is a globally standard serial communication protocol, which determines the unified "traffic" rules for the data expressway. CAN equipment is a device connected to CAN bus through CAN nodes, such as sensor, engine, controller, etc.

For example, at present, the network connection mode on the vehicle mainly adopts two CAN buses. One high-speed CAN bus is used for the drive system, mainly for the control units with high real-time requirements, such as engine, motor, etc. One low-speed CAN bus is used in the body system, mainly for the body control, such as the acquisition and feedback of signals from lamps, doors and windows. It is characterized by many signals but low real-time requirements. In the specific embodiment of the application, the first device may be a PC device or a CAN device. For example, when the first device is a PC device and the CANbus conversion device is used to detect the device to be tested, it is necessary to connect the device to be tested with the PC device through the USB interface and receive the data of USB protocol type transmitted by the PC device through the USB interface. Among them, the device to be tested may be automobile or vehicle-mounted mobile elevating work platform, etc. When the first device is a CAN device, it receives the data of UAVCAN protocol type transmitted by the CAN device through the CAN bus.

S120 for converting the data of USB protocol type into the data of UAVCAN protocol type; alternatively, converting the data of UAVCAN protocol type into the data of USB protocol type.

In the specific embodiment of the application, when using the CANbus conversion device to detect the device to be tested, the implementation of mutual conversion between the data of USB protocol type and the data of UAVCAN protocol type is required for the connection of the PC device with the CAN device. In order to avoid parsing the protocol packet, if you want to pack it into serial port data and transmit it to the corresponding device, the USB-to-UART serial port chip is used to convert the data type into the data of SCP protocol type first. That is, to convert the data of USB protocol type into the data of UAVCAN protocol type, it is necessary to convert the data of USB protocol type to the data of SCP protocol type first, and then convert the data of SCP protocol type into the data of UAVCAN protocol type. To convert the data of UAVCAN protocol type to the data of USB protocol type, it is necessary to convert the data of UAVCAN protocol type into the data of SCP protocol type, and then convert the data of SCP protocol type into the data of USB protocol type.

In the specific embodiment of the application, UART (Universal Asynchronous Receiver/Transmitter) is a universal serial data bus, which is used for two-way communication and asynchronous communication, and can realize full duplex transmission and reception. When connecting PC device with MCU, it is necessary to convert the data of USB protocol type into the data of SCP protocol type. Preferably, this embodiment adds a USB-to-UART serial port chip to implement the conversion of data between USB interface and UART interface. The role of the USB-to-UART serial port chip is to convert the data of USB protocol type into the data of SCP protocol type; alternatively, convert the data of SCP protocol type into the data of USB protocol type. Among them, SCP (Serial Communication Protocol) is a specific serial port protocol format running in the UART physical layer.

In the specific embodiment of the application, the data of SCP protocol type is converted into the data of UAVCAN protocol type through MCU single chip microcomputer. The data signal conversion protocol includes SCP codec module, SCP-UAVCAN converter and UAVCAN codec module. MCU includes UART port and at least one CAN transceiver. Each CAN transceiver is connected to the CAN bus. After the data of SCP protocol type is converted into the data of UAVCAN protocol type through data signal protocol conversion, the data of UAVCAN protocol type is transmitted to the CAN device.

S130 for transmitting the data of UAVCAN protocol type or the data of USB protocol type to the second device.

In the specific embodiment of the application, when the first device is a PC device and the second device is a CAN device, the data of USB protocol type transmitted by the PC device is received through the USB interface, and then converted into the data of UAVCAN protocol type, which will be finally transmitted to the CAN device. When the first device is a CAN device and the second device is a PC device, the data of UAVCAN protocol type transmitted by the CAN device is received through the CAN bus, and then converted into the data of USB protocol type, which will be finally transmitted to the PC device.

In the technical solution provided by this embodiment, the data of USB protocol type transmitted by the PC device is received through the USB interface, and then converted into the data of UAVCAN protocol type, which will be finally transmitted to the CAN device. Alternatively, the data of UAVCAN protocol type transmitted by the CAN device is received through the CAN bus, and then converted into the data of USB protocol type, which will be finally transmitted to the PC device. In the existing signal conversion methods, when the CAN box is used, it is necessary to install the corresponding driver for normal connection, which is not very convenient for use. Through the data conversion between various protocol types, the application solves the problem that the driver needs to be installed when the CAN box is used, and realizes fast signal transmission.

### Embodiment 2

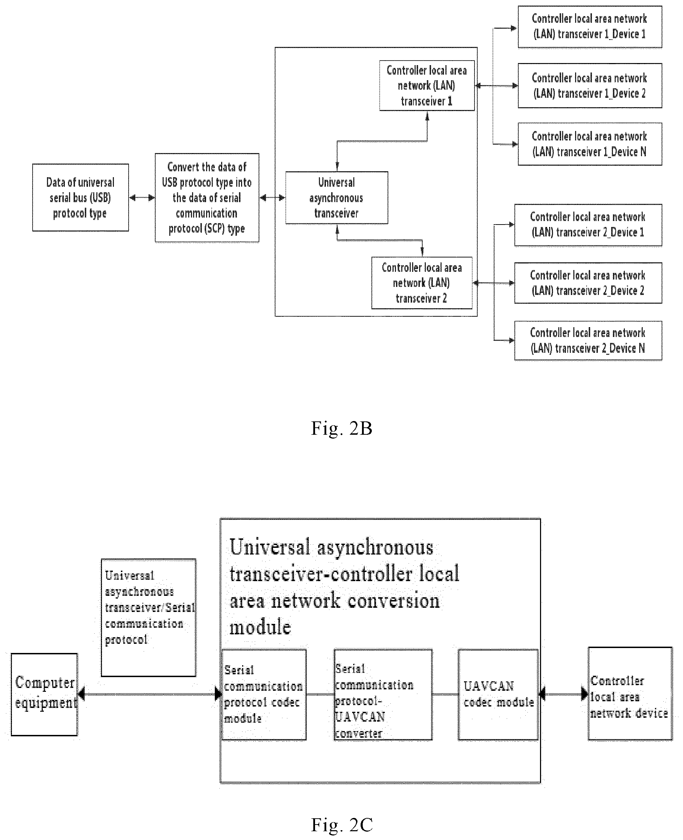

Fig. 2A is the second flow diagram of a method of signal conversion provided by the embodiment of the application, Fig. 2B is the hardware scheme block diagram of a method of signal conversion provided by the embodiment of the application, and Fig. 2C is the software scheme block diagram of a method of signal conversion provided by the embodiment of the application. The embodiment of the application is optimized on the basis of the above embodiment. Optionally, the embodiment explains in detail the conversion process of data of protocol types between the PC device and the CAN device.

Referring to Fig. 2A, the method provided in the embodiment includes but is not limited to the following steps:
S210 for receiving the data of USB protocol type transmitted by the PC device through USB interface.

In the specific embodiment of the application, when the CANbus conversion device is used to detect the device to be tested, it is necessary to connect the device to be tested with the PC device through the USB interface and receive the data of USB protocol type transmitted by the PC device through the USB interface. Among them, the device to be tested may be automobile or vehicle-mounted mobile elevating work platform, etc.

S220 for converting the data of USB protocol type into the data of SCP protocol type.

In the specific embodiment of the application, when the USB interface in the PC device is connected with the UART interface in the MCU the single chip microcomputer, it is necessary to convert the data of USB protocol type into the data of SCP protocol type. SCP is a specific serial port protocol format running in UART physical layer. In this embodiment, after the USB interface receives the data of USB protocol type transmitted by the PC device, the USB-to-UART serial port chip will be used to convert the data of USB protocol type into the data of SCP protocol type.

S230 for converting the data of SCP protocol type into the data of UAVCAN protocol type.

In the specific embodiment of the application, the data of SCP protocol type is converted into the data of UAVCAN protocol type through MCU single chip microcomputer. The data signal conversion protocol includes SCP codec module, SCP-UAVCAN converter and UAVCAN codec module. MCU single chip microcomputer includes UART port and at least one CAN transceiver. Each CAN transceiver is connected to the CAN bus.

S230 for transmitting the data of UAVCAN protocol type to the CAN device.

In the specific embodiment of the application, the MCU single chip microcomputer is used to convert the data of SCP protocol type into the data of UAVCAN protocol type, which will be then transmitted to the CAN device through the CAN bus.

In the technical solution provided by this embodiment, the data of USB protocol type transmitted by the PC device is received through the USB interface, and then converted into the data of SCP protocol type, which will be converted into the data of UAVCAN protocol type, which will be finally transmitted to the CAN device. In the existing signal conversion methods, when the CAN box is used, it is necessary to install the corresponding driver for normal connection, which is not very convenient for use. Through the data conversion between various protocol types, the application solves the problem that the driver needs to be installed when the CAN box is used, and realizes fast signal transmission.

### Embodiment 3

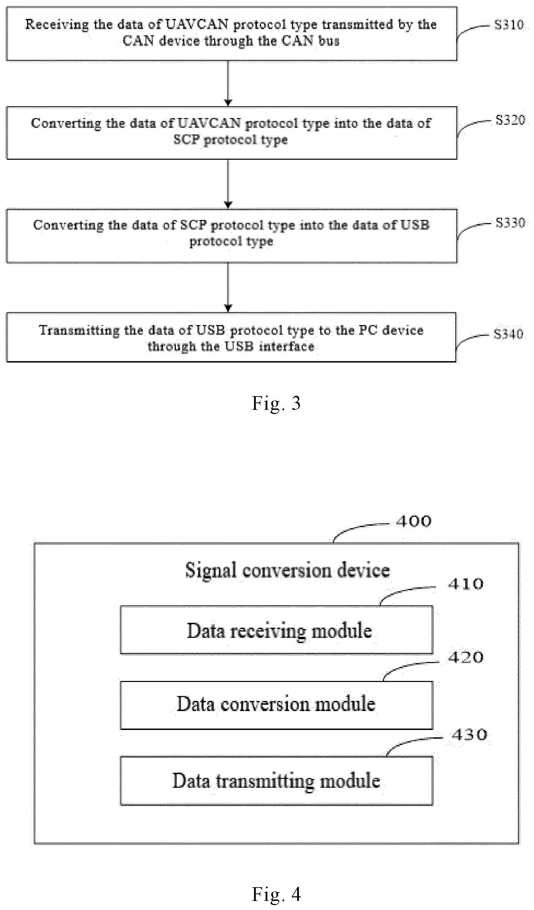

Fig. 3 is the third flow diagram of a method of signal conversion provided by the embodiment of the application. The embodiment of the application is optimized on the basis of the above embodiment. Alternatively, the conversion process of the data of various protocol types between the CAN device and the PC device in this embodiment is explained in detail.

Referring to Fig. 3, the method provided in the embodiment includes but is not limited to the following steps:
S310 for receiving the data of UAVCAN protocol type transmitted by the CAN device through the CAN bus.

In the specific embodiment of the application, the data transmission is bidirectional, that is, the data can be transmitted from the PC device to the CAN device through data signal protocol conversion, or from the CAN device to the PC device through data signal protocol conversion.

In the specific embodiment of the application, many nodes on the CAN bus are connected to the CAN device, which may be a sensor, a controller, an actuator, etc. The CAN bus receives the data of UAVCAN protocol type transmitted by the CAN device.

S320 for converting the data of UAVCAN protocol type into the data of SCP protocol type.

In the specific embodiment of the application, the data of UAVCAN protocol type is the data of SCP protocol type converted by the MCU single chip microcomputer through data signal conversion. Among them, the data signal conversion protocol includes: UAVCAN codec module, UAVCAN-SCP converter and SCP codec module. MCU includes UART port and at least one CAN transceiver. Each CAN transceiver is connected to the CAN bus.

S330 for converting the data of SCP protocol type into the data of USB protocol type.

In the specific embodiment of the application, the data at the CAN bus node enters the MCU single chip microcomputer through the CAN transceiver, and the data of UAVCAN protocol type is converted into the data of SCP protocol type through the data signal protocol conversion, and then transmitted to the USB-to-UART chip through the UART interface. The UART-to-USB chip is used to convert the data of SCP protocol type into the data of USB protocol type.

S340 for transmitting the data of USB protocol type to the PC device through the USB interface.

In the specific embodiment of the application, the UART-to-USB chip is used to convert the data of SCP protocol type into the data of USB protocol type, and finally connected to the PC device through the USB interface.

In the technical solution provided by this embodiment, the data of UAVCAN protocol type transmitted by the CAN device is received through the CAN bus, and then converted into the data of SCP protocol type, which will be converted into the data of USB protocol type, which will be finally transmitted to the PC device through the USB interface. In the existing signal conversion methods, when the CAN box is used, it is necessary to install the corresponding driver for normal connection, which is not very convenient for use. Through the data conversion between various protocol types, the application solves the problem that the driver needs to be installed when the CAN box is used, and realizes fast signal transmission.

### Embodiment 4

Fig. 4 is the structural diagram of a signal conversion device provided by the embodiment of the application. As shown in Fig. 4, the device 400 may include a data receiving module 410, a data conversion module 420 and a data transmitting module 430; among them,

The data receiving module 410 is used to receive the data of USB protocol type or the data of UAVCAN protocol type data transmitted by the first device.

The data conversion module 420 is used to convert the data of USB protocol type into the data of UAVCAN protocol type; alternatively, convert the data of UAVCAN protocol type into the data of USB protocol type.

The data transmitting module 430 is used to transmit the data of UAVCAN protocol type or the data of USB protocol type to the second device.

Further, the data conversion module 420 is specifically used to convert the data of USB protocol type into the data of serial communication protocol SCP protocol type; convert the data of SCP protocol type into the data of UAVCAN protocol type; or, convert the data of UAVCAN protocol type into the data of SCP protocol type; convert the data of SCP protocol type into the data of USB protocol type.

The signal conversion device can execute the method provided by any embodiment of the application, and has the corresponding functional modules and beneficial effects to execute the method. For technical details not described in detail in this embodiment, please refer to the signal conversion method provided in any embodiment of the application.

### Embodiment 5

According to the embodiment of the application, the application also provides an electronic device and a readable storage medium.

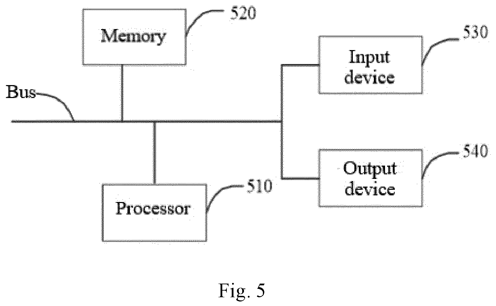

Fig. 5 is a block diagram of an electronic device of a method of signal conversion according to an embodiment of the application. The electronic devices are intended to represent various forms of digital computers, such as laptops, desktops, workstations, personal digital assistants (PDAs), servers, blade servers, mainframe computers, and other suitable computers. Electronic devices may also represent various forms of mobile devices, such as personal digital processing, cellular phones, smart phones, wearable devices, and other similar computing devices. The components shown herein, their connections and relationships, and their functions are merely examples and are not intended to limit the implementation of the application described and/or required herein.

As shown in Fig. 5, the electronic device includes one or more processors 510, a memory 520, and an interface for connecting various components, including high-speed interfaces and low-speed interfaces. Various components are connected to each other by different buses, and may be installed on the common motherboard or in other ways as needed. The processor may process instructions executed within the electronic device, including instructions stored in or on memory to display graphical information of the GUI on an external input /output device, such as a display device coupled to an interface. In other embodiments, multiple processors and/or multiple buses may be used with multiple memories and multiple memories if necessary. Similarly, multiple electronic devices may be connected, and each device provides some necessary operations (for example, as a server array, a set of blade servers, or a multiprocessor system). In Fig. 5, a processor 510 is taken as an example.

The memory 520 is a non-transitory computer-readable storage medium provided in the application. The memory stores instructions executable by at least one processor to enable the at least one processor to execute the signal conversion method provided in the application. The non-transitory computer-readable storage medium of the application stores computer instructions which are used to cause the computer to execute the signal conversion method provided by the application.

As a non-transitory computer-readable storage medium, the memory 520 may be used to store non-transitory software programs, non-transitory computer executable programs and modules, such as program instructions/modules corresponding to the signal conversion method in the embodiment of the application (for example, data receiving module 410, data conversion module 420 and data transmission module 430 shown in the signal conversion device 400). The processor 510 executes various functional applications and data processing of the server by running non-transitory software programs, instructions and modules stored in the memory 520, that is, thereby realizing the signal conversion method in the above method embodiment.

The memory 520 may include a program storage area and a data storage area. Specifically, the program storage area may store an operating system and an application program required for at least one function; the data storage area may store the data created according to the use of the electronic device for signal conversion. In addition, the memory 520 may include high-speed random access memory and may also include non-transitory memory, such as at least one disk storage device, flash memory device, or other non-transitory solid-state storage device. In some embodiments, the memory 520 may optionally include memory remotely set relative to the processor 510, which may be connected to the electronic device of signal conversion through a network. Examples of the above networks include but are not limited to the Internet, intranet, LAN, mobile communication network and combinations thereof.

The electronic device for the signal conversion method may also include an input device 530 and an output device 540. The processor 510, the memory 520, the input device 530 and the output device 540 may be connected through a bus or other means. In Fig. 5, the connection through a bus is taken as an example.

The input device 530 may receive the digital or character information as input and generate key signal input related to the user setting and function control of the electronic device for signal conversion, such as touch screen, keypad, mouse, trackpad, touch pad, indicator rod, one or more mouse buttons, trackball, joystick and other input devices. The output device 540 may include a display device, an auxiliary lighting device (for example, LED), a tactile feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and techniques described herein may be implemented in digital electronic circuit systems, integrated circuit systems, application specific ASICs (application specific integrated circuits), computer hardware, firmware, software, and/or combinations thereof. These various embodiments may include being implemented in one or more computer programs, which may be executed and/or interpreted on a programmable system including at least one programmable processor, which may be a special-purpose or general-purpose programmable processor, which may receive the data and instructions from a storage system, at least one input device and at least one output device and transmit the data and instructions to the storage system, at least one input device and at least one output device.

These computing programs (also referred to as programs, software, software applications, or codes) include machine instructions of programmable processors and may be implemented using high-level processes and/or object-oriented programming languages, and/or assembly/machine languages. As used herein, the terms "machine readable medium" and "computer readable medium" refer to any computer program product, device, and/or device (for example, magnetic disk, optical disk, memory, programmable logic device (PLD)) for providing machine instructions and/or data to a programmable processor, including a machine-readable medium that receives machine instructions as machine- readable signals. The term "machine readable signal" refers to any signal used to provide machine instructions and/or data to a programmable processor.

In order to provide interaction with the user, the systems and techniques described herein may be implemented on a computer which consists of: a display device for displaying information to the user (for example, a CRT (cathode ray tube) or LCD (liquid crystal display) monitor); and a keyboard and pointing device (for example, mouse or trackball), through which the user may provide input to the computer. Other kinds of devices may also be used to provide interaction with the user; for example, the feedback provided to the user may be any form of sensory feedback (for example, visual feedback, auditory feedback, or tactile feedback); and the input from the user may be received in any form (including acoustic input, voice input or tactile input).

The systems and techniques described herein may be implemented in a computing system including back-end components (for example, as a data server), or a computing system including middleware components (for example, a user computer having a graphical user interface or a web browser through which a user can interact with the embodiments of the systems and technologies described herein), or any combination of such back-end components, middleware components, or front-end components. The components of the system can be connected to each other by digital data communication in any form or medium (for example, communication network). Examples of communication networks include local area network (LAN), wide area network (WAN), Internet and blockchain network.

The computer system may include a client and a server. The client and the server are generally far away from each other and usually interact through a communication network. The relationship between the client and the server is generated by computer programs running on the corresponding computers and having a client server relationship with each other. The server may be a cloud server, also known as cloud computing server or virtual machine. It is a host product in the cloud computing service system to solve the defects such as difficult management and weak business scalability in traditional physical host and VPS services.

According to the technical solution of the embodiment of the application, firstly, the data of USB protocol type transmitted by the PC device is received through the USB interface, and then converted into the data of UAVCAN protocol type, which will be finally transmitted to the CAN device. Alternatively, the data of UAVCAN protocol type transmitted by the CAN device through the CAN bus is received through the CAN bus, and then converted into the data of USB protocol type, which will be finally transmitted to the PC device. In the existing signal conversion methods, when the CAN box is used, it is necessary to install the corresponding driver for normal connection, which is not very convenient for use. Through the conversion between the data of various protocol types, the application solves the problem that the driver needs to be installed when the CAN box is used, thus realizing rapid signal transmission.

It should be understood that steps can be re-sorted, added, or deleted using the various forms of processes shown above. For example, the steps recorded in the application can be performed in parallel, sequentially, or in different orders. As long as the desired results of the technical solution disclosed in the application can be achieved, no limitation will be imposed in this paper.

## Claims

1. A method of signal conversion, comprising:
receiving the data of USB protocol type or the data of UAVCAN protocol type transmitted by the first device (S110);
converting the data of USB protocol type into the data of UAVCAN protocol type; alternatively, converting the data of UAVCAN protocol type into the data of USB protocol type (S120);
transmitting the data of UAVCAN protocol type or the data of USB protocol type to the second device (S130),
wherein converting the data of USB protocol type into the data of UAVCAN protocol type comprises:
converting the data of USB protocol type into the data of serial communication protocol, SCP, type (S220), wherein SCP is running in a Universal Asynchronous Receiver/Transmitter, UART, physical layer;
converting the data of serial communication protocol, SCP, type into the data of UAVCAN protocol type (S230) through data signal conversion, using a data signal conversion protocol, which includes an SCP codec module, an SCP-UAVCAN converter and a UAVCAN codec module, and
wherein converting the data of UAVCAN protocol type into the data of USB protocol type comprises:
converting the data of UAVCAN protocol type into the data of SCP protocol type (S320) through data signal conversion, using the data signal conversion protocol, which includes the UAVCAN codec module, a UAVCAN-SCP converter and the SCP codec module;
converting the data of SCP protocol type into the data of USB protocol type (S330),
wherein converting the data of USB protocol type into the data of SCP protocol type is performed by a USB to UART serial port chip; alternatively, wherein converting the data of SCP protocol type to the data of USB protocol type is performed by the USB to UART serial port chip.

2. An electronic device, comprising:
one or more processors (510);
a storage device (520) for storing one or more programs;
when the one or more programs are executed by the one or more processors (510), causing the one or more processors (510) to implement the signal conversion method according to claim 1.

3. A computer-readable storage medium on which a computer program is stored, which is **characterized in that** when the program is executed by a processor (510), the method of signal conversion according to claim 1 is implemented.

## Patentansprüche

1. Verfahren zur Signalumwandlung, umfassend:
Empfangen der Daten des USB-Protokolltyps oder der Daten des UAVCAN-Protokolltyps, die von der ersten Vorrichtung übertragen werden (S110);
Umwandeln der Daten des USB-Protokolltyps in die Daten des UAVCAN-Protokolltyps; alternativ Umwandeln der Daten des UAVCAN-Protokolltyps in die Daten des USB-Protokolltyps (S120);
Übertragen der Daten des UAVCAN-Protokolltyps oder der Daten des USB-Protokolltyps an die zweite Vorrichtung (S130),
wobei das Umwandeln der Daten des USB-Protokolltyps in die Daten des UAVCAN-Protokolltyps umfasst:
Umwandeln der Daten des USB-Protokolltyps in die Daten des Typs des seriellen Kommunikationsprotokolls, SCP, (S220), wobei SCP in einer physikalischen Schicht eines universellen asynchronen Empfängers/Senders, UART, läuft;
Umwandeln der Daten des Typs des seriellen Kommunikationsprotokolls, SCP, in die Daten des UAVCAN-Protokolltyps (S230) durch Datensignalumwandlung unter Verwendung eines Datensignalumwandlungsprotokolls, das ein SCP-Codec-Modul, einen SCP-UAVCAN-Wandler und ein UAVCAN-Codec-Modul enthält, und
wobei das Umwandeln der Daten des UAVCAN-Protokolltyps in die Daten des USB-Protokolltyps umfasst:
Umwandeln der Daten des UAVCAN-Protokolltyps in die Daten des SCP-Protokolltyps (S320) durch Datensignalumwandlung unter Verwendung des Datensignalumwandlungsprotokolls, das das UAVCAN-Codec-Modul, einen UAVCAN-SCP-Wandler und das SCP-Codec-Modul enthält;
Umwandeln der Daten des SCP-Protokolltyps in die Daten des USB-Protokolltyps (S330),
wobei das Umwandeln der Daten des USB-Protokolltyps in die Daten des SCP-Protokolltyps durch einen seriellen USB-zu-UART-Port-Chip durchgeführt wird; alternativ wobei das Umwandeln der Daten des SCP-Protokolltyps in die Daten des USB-Protokolltyps durch den seriellen USB-zu-UART-Port-Chip durchgeführt wird.

2. Elektronische Vorrichtung, umfassend:
einen oder mehrere Prozessoren (510);
eine Speichervorrichtung (520) zum Speichern eines oder mehrerer Programme;
wenn das eine oder die mehreren Programme durch den einen oder die mehreren Prozessoren (510) ausgeführt werden, Bewirken, dass der eine oder die mehreren Prozessoren (510) das Signalumwandlungsverfahren nach Anspruch 1 implementieren.

3. Computerlesbares Speichermedium, auf dem ein Computerprogramm gespeichert ist, das **dadurch gekennzeichnet ist, dass**, wenn das Programm durch einen Prozessor (510) ausgeführt wird, das Verfahren zur Signalumwandlung nach Anspruch 1 implementiert wird.

## Revendications

1. Procédé de conversion de signal, comprenant :
la réception des données de type de protocole USB ou des données de type de protocole UAVCAN transmises par le premier dispositif (S110) ;
la conversion des données de type de protocole USB en données de type de protocole UAVCAN ; en variante, la conversion des données de type de protocole UAVCAN en données de type de protocole USB (S120) ;
la transmission des données de type de protocole UAVCAN ou des données de type de protocole USB au second dispositif (S130),
dans lequel la conversion des données de type de protocole USB en données de type de protocole UAVCAN comprend :
la conversion des données de type de protocole USB en données de type de protocole de communication série, SCP, (S220), SCP fonctionnant dans une couche physique de récepteur/émetteur asynchrone universel, UART ;
la conversion des données de type de protocole de communication série, SCP, en données de type de protocole UAVCAN (S230) par conversion de signal de données, en utilisant un protocole de conversion de signal de données, qui comprend un module de codec SCP, un convertisseur SCP-UAVCAN et un module de codec UAVCAN, et
dans lequel la conversion des données de type de protocole UAVCAN en données de type de protocole USB comprend :
la conversion des données de type de protocole UAVCAN en données de type de protocole SCP (S320) par conversion de signal de données, en utilisant le protocole de conversion de signal de données, qui comprend le module de codec UAVCAN, un convertisseur UAVCAN-SCP et le module de codec SCP ;
la conversion des données de type de protocole SCP en données de type de protocole USB (S330),
dans lequel la conversion des données de type de protocole USB en données de type de protocole SCP est effectuée par une puce de port série USB-UART ; en variante, dans lequel la conversion des données de type de protocole SCP en données de type de protocole USB est effectuée par la puce de port série USB-UART.

2. Dispositif électronique, comprenant :
un ou plusieurs processeurs (510) ;
un dispositif de stockage (520) pour stocker un ou plusieurs programmes ;
lorsque les un ou plusieurs programmes sont exécutés par les un ou plusieurs processeurs (510), amener les un ou plusieurs processeurs (510) à mettre en oeuvre le procédé de conversion de signal selon la revendication 1.

3. Support de stockage lisible par ordinateur sur lequel un programme informatique est stocké, qui est **caractérisé en ce que** lorsque le programme est exécuté par un processeur (510), le procédé de conversion de signal selon la revendication 1 est mis en oeuvre.
